# EUROPEAN PATENT APPLICATION

(11) **EP 4 400 451 A1**
(43) Date of publication of application: **17.07.2024**
(21) Application number: 22863992.8
(22) Date of filing: 13.06.2022
(51) Int. Cl.: B65G 1/04

(54) **TRANSFER DEVICE AND TRANSPORT VEHICLE**

(30) Priority: 06.09.2021 JP 2021144986
(71) Applicant: Daifuku Co., Ltd., Osaka 555-0012 (JP)
(72) Inventor: TSUJIMOTO, Kazushi, Gamo-gun, Shiga 529-1692 (JP)
(74) Representative: Meissner Bolte Partnerschaft mbB
(86) International application number: PCT/JP2022/023563
(87) International publication number: WO 2023/032404

(57) **Abstract**

Provided is a transfer device for correcting a posture of a transfer target. A transfer device (3) includes: a platform (68) on which a transfer target is to be placed; belts (74) of right and left belt conveyors (7) for sandwiching the transfer target (200); a control section which controls operations of the belts (74) to transfer, while sandwiching, the transfer target (200) from a transfer origin to the platform (68); and a sensing section which senses a posture of the transfer target during the control by the control section. If the posture of the transfer target sensed by the sensing section is tilted with respect to a prescribed posture, the control section controls the pair of belts (74) to transfer the transfer target in different operations so as to correct the posture of the transfer target.

## Description

### Technical Field

The present invention relates to a transfer device and the like for transferring a transfer target.

### Background Art

A stacker crane, a carriage cart, and the like are each mounted with a transfer device for loading and unloading an article to and from a storage shelf. For example, Patent Literature 1 discloses a transfer device including side conveyors that transport an article by moving while sandwiching the article from both sides.

### Citation List

### [Patent Literature]

[Patent Literature 1]
Japanese Patent Application Publication, Tokukai, No. 2002-114317

### Summary of Invention

### Technical Problem

In a case where an article is taken out from a shelf by the transfer device, if a position or posture of the article is not appropriate, the side conveyors cannot exert conveyance forces evenly on both sides of the article even if the article is sandwiched by the side conveyors from both sides. For this reason, a problem occurs in which the article is tilted with respect to the transfer direction and thus transfer of the article is hindered.

An object of an aspect of the present invention is to provide a transfer device and the like which can correct a posture of a transfer target to be transferred.

### Solution to Problem

In order to attain the object, a transfer device in accordance with an aspect of the present invention includes: a placement section on which a transfer target is to be placed; a pair of support bodies which are to sandwich the transfer target from a right side and a left side; a control section which carries out control of respective operations of the pair of support bodies so that the pair of support bodies sandwich the transfer target and transfer the transfer target from a transfer origin to the placement section; and a sensing section which senses a posture of the transfer target while the control by the control section is carried out, in a case where the posture sensed by the sensing section is tilted with respect to a prescribed posture, the control section carrying out control so that the pair of support bodies transfer the transfer target in different operations so as to correct the posture of the transfer target.

### Advantageous Effects of Invention

According to an aspect of the present invention, it is possible to provide a transfer device which can correct a posture of a transfer target to be transferred.

### Brief Description of Drawings

Fig. 1 is a plan view illustrating a configuration of a storage warehouse that is common to Embodiments 1 through 4 of the present invention.
Fig. 2 is a plan view illustrating a configuration of a carrier that travels on a path in the storage warehouse.
Fig. 3 is a front view illustrating a configuration of the carrier.
Fig. 4 is a block diagram illustrating a configuration of a control system of a transfer device in the carrier.
Fig. 5 is a diagram illustrating an operation to transfer a transfer target by a transfer device in accordance with Embodiments 1 through 3 of the present invention.
Fig. 6 is a diagram illustrating an operation to transfer a transfer target by a transfer device in accordance with Embodiment 4 of the present invention.

### Description of Embodiments

### [Storage warehouse and carrier]

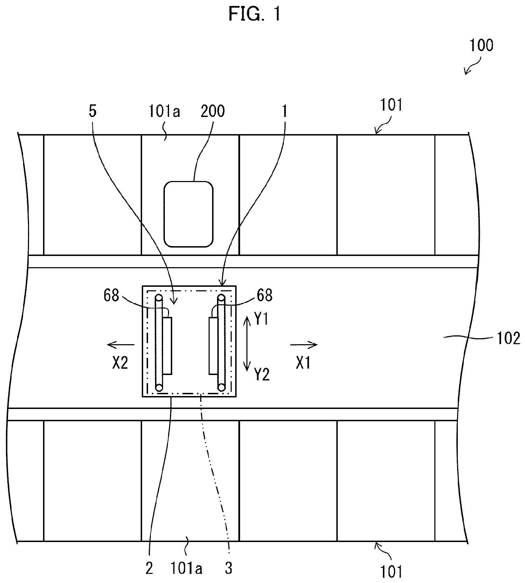

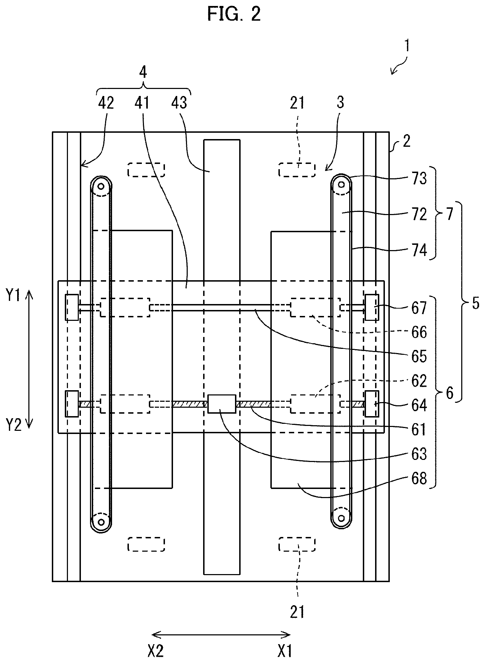

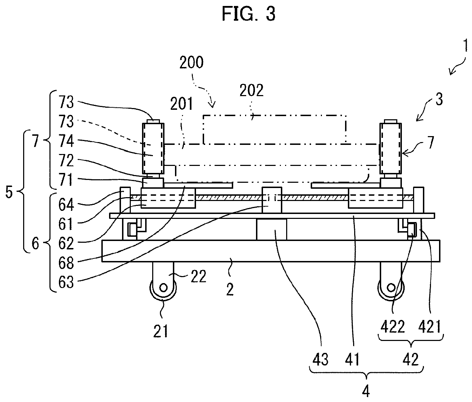

The following description will discuss a storage warehouse and a carrier which are common to Embodiments 1 through 3 of the present invention, with reference to Figs. 1 through 3. Fig. 1 is a plan view illustrating a configuration of a storage warehouse 100. Fig. 2 is a plan view illustrating a configuration of a carrier 1 that travels on a path 102 in the storage warehouse 100. Fig. 3 is a front view illustrating a configuration of the carrier 1.

As illustrated in Fig. 1, the storage warehouse 100 includes a storage shelf 101 and a path 102. The path 102 is formed in a straight line so that the carrier 1 can move back and forth. Storage shelves 101 are disposed on both sides of the path 102. Each of the storage shelves 101 is sectioned into a plurality of accommodation sections 101a (transfer origin) that are sequentially arranged along the path 102. Fig. 1 illustrates the storage shelves 101 and the path 102 in one stage. The storage shelf 101 includes a plurality of stages of the storage shelves 101 and the path 102 illustrated in Fig. 1. The storage shelf 101 further includes a raising and lowering device (not illustrated) that raises and lowers the carrier 1 to a path 102 at each of the stages.

The carrier 1 includes a base 2 and a transfer device 3. The base 2 is configured to move back and forth on the path 102 in an X1 direction and in an X2 direction, which is opposite to the X1 direction, along a longitudinal direction of the path 102. Specifically, as illustrated in Figs. 2 and 3, four wheels 21 are provided to a lower surface of the base 2. The base 2 is formed in a rectangular shape that has short sides extending along the X1 direction and the X2 direction and long sides extending along a direction perpendicular to the X1 direction and the X2 direction.

The transfer device 3 is provided on the base 2, and includes a sandwiching mechanism 5 (see Figs. 2 and 3) for sandwiching a transfer target 200. The transfer device 3 causes the sandwiching mechanism 5 to reciprocate in a Y1 direction (transfer direction) which is perpendicular to the X1 direction and the X2 direction, and in a Y2 direction (transfer direction) which is opposite to the Y1 direction. With the configuration, the transfer device 3 transfers the transfer target 200 between the accommodation section 101a and a platform 68 (placement section) (described later) which is provided on the transfer device 3.

Next, the transfer device 3 will be described in detail.

As illustrated in Figs. 2 and 3, the transfer device 3 includes a reciprocating mechanism 4 and a sandwiching mechanism 5.

The reciprocating mechanism 4 is a mechanism that is provided for causing the sandwiching mechanism 5 to project from the base 2 to the accommodation section 101a (in the Y1 direction or the Y2 direction), and causing the sandwiching mechanism 5 to retract from the accommodation section 101a to the base 2 (in the Y2 direction or the Y1 direction). The reciprocating mechanism 4 includes a slide board 41, a guiding mechanism 42, and a driving mechanism 43.

The slide board 41 is a board member for supporting the sandwiching mechanism 5 and is disposed on the base 2. The slide board 41 is formed in a rectangular shape that has long sides which are slightly shorter than a width (short side) of the base 2 and short sides which are approximately 1/3 of a length (long side) of the base 2. The slide board 41 is arranged so that its longitudinal direction is perpendicular to the Y1 direction and the Y2 direction.

The guiding mechanism 42 is a mechanism for guiding the slide board 41 in the Y1 direction and the Y2 direction. As illustrated in Fig. 3, the guiding mechanism 42 includes a pair of guide rails 421 and four rollers 422.

The guide rails 421 are each formed in a straight line shape so as to extend in the Y1 direction and the Y2 direction, and are disposed near both side edges of the base 2 on an upper surface of the base 2. The guide rails 421 have respective recesses formed on sides facing each other.

The rollers 422 are supported by a lower surface of the slide board 41 so as to be rotatable. The rollers 422 are disposed so that two of which are disposed in a recess of each of the guide rails 421, and roll on a bottom surface of the recess in the Y1 direction and the Y2 direction.

The driving mechanism 43 is a mechanism for driving the slide board 41 in the Y1 direction and the Y2 direction on the base 2. The drive mechanism 43 is provided in the form of a straight line so as to extend in the Y1 direction and the Y2 direction, and is disposed to be parallel to the pair of guide rails 421 at an intermediate position between the guide rails 421. The driving mechanism 43 is, for example, a mechanism such as a timing belt, a pulley, or a rack and pinion that converts rotational motion into linear motion.

The sandwiching mechanism 5 includes a widening-narrowing mechanism 6 and a pair of belt conveyors 7.

The widening-narrowing mechanism 6 is a mechanism that causes the pair of belt conveyors 7 to move, along the X1 direction and the X2 direction, in directions in which a space between the belt conveyors 7 is narrowed, and in directions in which the space is widened. The widening-narrowing mechanism 6 includes a pair of screw shafts 61, a pair of nuts 62, a common bearing 63, a pair of bearings 64, a slide shaft 65, a pair of holders 66, a pair of support members 67, and a pair of platforms 68.

The screw shafts 61 are provided on the slide board 41 and are disposed near a side edge of one long side of the slide board 41. The screw shafts 61 are arranged in the X1 direction and the X2 direction so that central axes thereof conform to each other. Among end portions of each of the screw shafts 61, an end portion closer to a side edge of a short side of the slide board 41 is rotatably supported by the bearing 64, and the other end portion is rotatably supported by the common bearing 63.

Each of the nuts 62 has a through hole, and the screw shaft 61 is inserted into the through hole. When the nut 62 makes rolling contact with the screw shaft 61 via a steel ball (not illustrated), the nut 62 moves along the screw shaft 61 in the X1 direction or the X2 direction in accordance with rotation of the screw shaft 61. Thus, the screw shaft 61 and the nut 62 constitute a ball screw.

The slide shaft 65 is provided on the slide board 41, and is disposed near a side edge of the slide board 41 on the other long side, and extends in parallel with the screw shafts 61. Both ends of the slide shaft 65 are fixed by the support members 67 and supported on the slide board 41.

The holders 66 each have a through hole, and the slide shaft 65 is inserted into the through hole. The holders 66 are provided to allow the slide shaft 65 to slide along the X1 direction and the X2 direction.

The platforms 68 are each disposed on the nut 62 and the holder 66 that are arranged side by side in the Y1 direction and the Y2 direction. Each of the platforms 68 is fixed to the nut 62 and the holder 66.

In the widening-narrowing mechanism 6 configured as described above, when the pair of screw shafts 61 are rotated in opposite directions, the pair of nuts 62 move so as to approach the common bearing 63 or so as to be away from the common bearing 63. Thus, the platform 68 fixed to the nut 62 also moves together with the nut 62. The holder 66 to which the platform 68 is fixed moves along the slide shaft 65 in accordance with movement of the platform 68. As such, the pair of platforms 68 move in directions in which the space therebetween is narrowed or in directions in which the space therebetween is widened.

As illustrated in Fig. 3, the belt conveyors 7 cause supporting surfaces of belts 74 (support body) that hold the transfer target 200 to move in the Y1 direction and the Y2 direction while the transfer target 200 is sandwiched between the belts 74. Each of the belt conveyors 7 includes a support 71, a pair of support plates 72, a pair of drive rollers 73, and a belt 74. Here, the transfer target 200 is assumed to be an article 202 which is a piece of baggage or the like placed on a tray 201. The tray 201 has a rectangular shape, and therefore an outside shape of the transfer target 200 also has a rectangular shape. The shape of the tray 201 is not limited to a rectangle, and may be another shape.

The support 71 is a member that supports the belt conveyor 7 on the widening-narrowing mechanism 6. Specifically, the support 71, as with the platform 68, is disposed on the nuts 62 and the holder 66 that are arranged side by side in the Y1 direction and the Y2 direction, and is fixed to the nut 62 and the holder 66. Thus, the support 71 moves together with the platform 68.

The pair of support plates 72 are arranged on the support 71 with a space therebetween in a vertical direction. A support plate 72 disposed at a lower side is fixed on the support 71. A support plate 72 disposed at an upper side is disposed above the lower support plate 72 with a spacer (not illustrated) provided therebetween.

The drive rollers 73 are respectively disposed at both ends of the pair of support plates 72. Drive shafts of the drive rollers 73 are rotatably supported by the pair of support plates 72. The drive rollers 73 each rotate in a forward direction and a reverse direction by a rotational driving force transmitted to the drive shaft.

The belt 74 has a constant width and is formed in an annular (endless) shape. The belt 74 is formed of a material (such as rubber) having a high coefficient of friction. The belts 74 hold the transfer target 200 with surfaces on sides where the pair of belt conveyors 7 face each other.

The sandwiching mechanism 5 configured as described above causes the pair of belt conveyors 7 to move in directions in which the space therebetween is narrowed or directions in which the space therebetween is widened. The pair of belt conveyors 7 cause the surfaces of the pair of right and left belts 74 that hold the transfer target 200 to move in the Y1 direction or the Y2 direction, and thus the transfer target 200 is moved in the Y1 direction or the Y2 direction.

The sandwiching mechanism 5 includes the belt conveyors 7. Note, however, that the sandwiching mechanism 5 may include another mechanism in place of the belt conveyors 7, provided that such another mechanism has an equivalent function. For example, such a mechanism may be a mechanism in which pads for holding the transfer target 200 are provided to a reciprocating mechanism that moves in the Y1 direction and the Y2 direction, or a rubber roller transfer mechanism. The rubber roller transfer mechanism includes a plurality of rubber rollers that are disposed to be aligned in the Y1 direction and the Y2 direction, and causes the transfer target 200 to move by the rubber rollers that are driven to rotate.

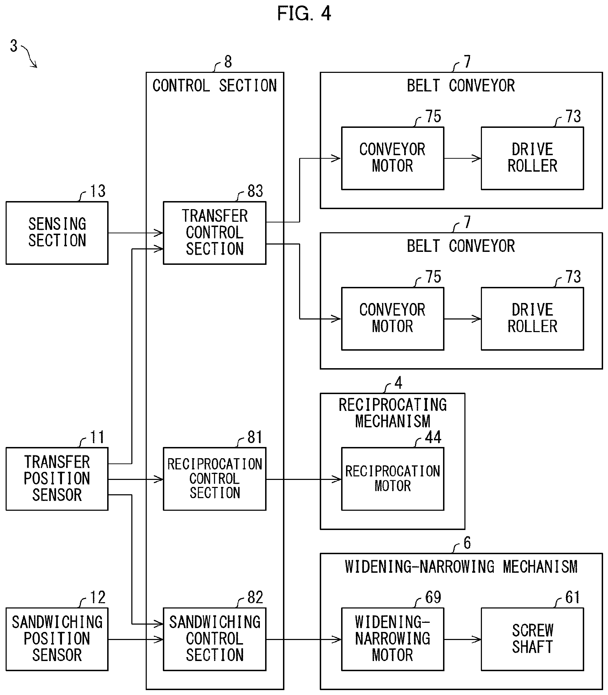

Next, a control system of the transfer device 3 will be described. Fig. 4 is a block diagram illustrating a configuration of the control system.

As illustrated in Fig. 4, the transfer device 3 includes a control section 8. The control section 8 controls, in the transfer device 3, operations of the reciprocating mechanism 4, the widening-narrowing mechanism 6, and the belt conveyors 7. The control section 8 includes a reciprocation control section 81, a sandwiching control section 82, and a transfer control section 83 in order to realize the control function. The transfer device 3 further includes, as elements constituting the control system, a transfer position sensor 11, a sandwiching position sensor 12, a reciprocation motor 44, a widening-narrowing motor 69, and a conveyor motor 75.

The transfer position sensor 11 is a sensor for detecting a position of the slide board 41 in the Y 1 direction and the Y2 direction, and is provided at a predetermined position on the base 2. Specifically, the transfer position sensor 11 detects a retraction position, a projection position, and an intermediate position of the slide board 41.

The retraction position is a position of the slide board 41 in a state in which the slide board 41 is at a prescribed position on the base 2 illustrated in Fig. 2. The prescribed position of the slide board 41 is a position at which the slide board 41 is positioned at the center of the base 2 while the carrier 1 is carrying the transfer target 200. The projection position is a position of the slide board 41 in a state in which the slide board 41 is mostly projected to the accommodation section 101a side. The intermediate position is a position between the retraction position and the projection position and is closer to the projection position.

The sandwiching position sensor 12 is a sensor for detecting positions of the belt conveyors 7 and is provided at a predetermined position on the base 2. Specifically, the sandwiching position sensor 12 detects a sandwiching position and a sandwiching release position. The sandwiching position is a position of the belt conveyors 7 in a state in which the space between the belt conveyors 7 is narrowest to sandwich the transfer target 200. The sandwiching release position is a position of the belt conveyors 7 in a state in which the space between the belt conveyors 7 is mostly widened.

The sensing section 13 senses a posture of the transfer target 200 while control of an operation of the transfer device 3 to transfer the transfer target 200 is carried out by the control section 8. A specific method of sensing a posture by the sensing section 13 will be described in Embodiments 1 through 4 later.

The conveyor motor 75 is a motor included in the belt conveyor 7 and rotates to drive the drive roller 73. The reciprocation motor 44 is a motor included in the reciprocating mechanism 4 and drives a driven portion of the reciprocating mechanism 4. The widening-narrowing motor 69 is a motor included in the widening-narrowing mechanism 6, and rotates to drive the screw shaft 61. The widening-narrowing motor 69 drives the pair of screw shafts 61 simultaneously. Therefore, the widening-narrowing mechanism 6 includes a driving force transmission mechanism (not illustrated) for transmitting a driving force of the widening-narrowing motor 69 to the pair of screw shafts 61.

The reciprocation control section 81 controls, in accordance with a position (detected reciprocation position) of the slide board 41 detected by the transfer position sensor 11, rotation and stop of rotation of the reciprocation motor 44 when carrying out a drawing operation in which the transfer device 3 transfers the transfer target 200 from the accommodation section 101a to the platform 68. Specifically, the reciprocation control section 81 reverses rotation of the reciprocation motor 44 between a projection period and a retraction period. The projection period is a period in which the slide board 41 is caused to project toward the accommodation section 101a until the detected reciprocation position changes from the retraction position to the projection position. The retraction period is a period in which the slide board 41 is retracted to the base 2 until the detected reciprocation position changes from the projection position to the retraction position.

The sandwiching control section 82 controls, in accordance with a position (detected conveyor position) of the belt conveyors 7 detected by the sandwiching position sensor 12 and a detected reciprocation position, rotation and stop of rotation of the widening-narrowing motor 69 when the transfer device 3 carries out a drawing operation. Specifically, the sandwiching control section 82 does not cause the widening-narrowing motor 69 to rotate until the detected reciprocation position changes from the retraction position to the intermediate position. When the intermediate position has been detected, the sandwiching control section 82 causes the widening-narrowing motor 69 to rotate in a direction in which the space between the pair of belt conveyors 7 is narrowed. The sandwiching control section 82 stops rotation of the widening-narrowing motor 69 when the sandwiching position has been detected. Moreover, the sandwiching control section 82 causes the widening-narrowing motor 69 to rotate until the detected reciprocation position changes from the projection position to the retraction position. When the retraction position has been detected, the sandwiching control section 82 causes the widening-narrowing motor 69 to rotate in a direction in which the space between the pair of belt conveyors 7 is widened.

The transfer control section 83 controls, based on the detected reciprocation position, an operation of the conveyor motors 75 in the pair of belt conveyors 7 when the transfer device 3 carries out a drawing operation. Specifically, the transfer control section 83 does not cause the conveyor motors 75 to rotate in a state in which the retraction position before the drawing operation is detected. The transfer control section 83 causes the conveyor motors 75 to rotate when the detected reciprocation position has been changed from the retraction position to the intermediate position, when the detected reciprocation position has been changed from the intermediate position to the projection position, and when the detected reciprocation position has been changed from the projection position to the intermediate position. The transfer control section 83 stops rotation of the conveyor motors 75 when the detected reciprocation position has been changed from the intermediate position to the retraction position.

The transfer control section 83 controls an operation of the pair of belt conveyors 7 in accordance with a posture (sensed posture) of the transfer target 200 sensed by the sensing section 13. Specifically, the transfer control section 83 synchronizes and controls the two conveyor motors 75 when the sensed posture is a prescribed posture. In a case where the sensed posture is tilted with respect to the prescribed posture, the transfer control section 83 individually controls the two conveyor motors 75 such that, in the pair of belt conveyors 7, the respective belts 74 transfer the transfer target 200 in different operations.

The prescribed posture is a posture of the transfer target 200 in a state in which a center line of the transfer target 200 conforms to the transfer direction (Y1 direction and Y2 direction). The prescribed posture includes also a posture of the transfer target 200 in a state in which the center line of the transfer target 200 is inclined within a predetermined minute angle range with respect to the transfer direction.

The transfer device 3 is mounted on the carrier 1. Note, however, that the transfer device 3 can also be applied to a device such as a stacker crane.

### Embodiment 1

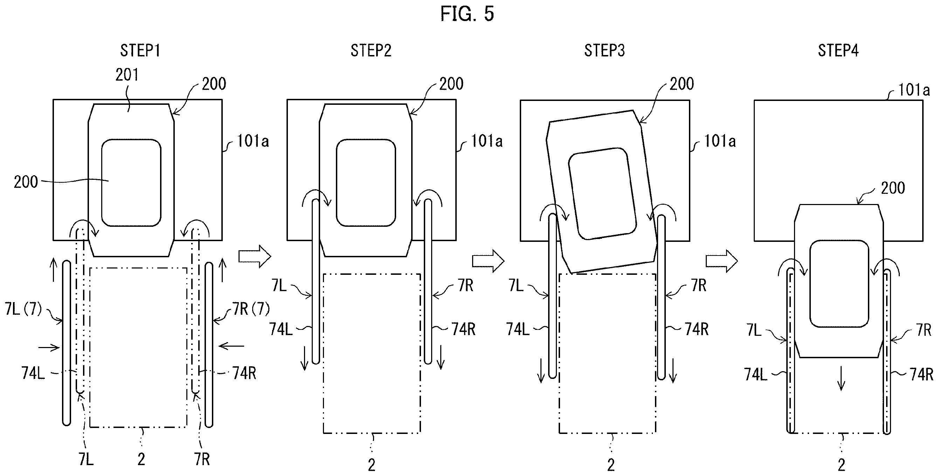

The following description will discuss Embodiment 1 of the present invention with reference to Fig. 5. Fig. 5 is a diagram illustrating an operation to transfer a transfer target 200 by a transfer device 3 in accordance with Embodiments 1 through 3 of the present invention. For convenience of description, a constituent element having a function equivalent to that of a constituent element discussed above is given the same reference sign, and a description thereof is omitted. The same applies to embodiments described later.

In the present embodiment, the following description will discuss a drawing operation carried out by the transfer device 3 in a state in which a posture of the transfer target 200 is tilted by the sensing section 13. First, in the plan view of Fig. 5, a belt conveyor 7 disposed on the left side of the base 2 is referred to as a belt conveyor 7L, and a belt conveyor 7 disposed on the right side of the base 2 is referred to as a belt conveyor 7R.

### (1) STEP 1

In a state before start of the drawing operation, the belt conveyors 7L and 7R are at the sandwiching release position, as indicated by the solid lines in Fig. 5. The transfer target 200 is deviated slightly to the left from the center in the accommodation section 101a.

When the drawing operation starts, the slide board 41 described above moves (projects) to the accommodation section 101a side. In this state, the belt conveyors 7L and 7R are not yet operating. When the slide board 41 reaches the intermediate position, as indicated by the two-dot chain lines in Fig. 5, the belt conveyors 7L and 7R move, by the sandwiching mechanism 5 described above, in directions in which the space therebetween is narrowed, and belts 74L and 74R of the respective belt conveyors 7L and 7R move in the arrow directions at the same speed. By carrying out the projection operation and the sandwiching operation of the belt conveyors 7L and 7R at the same time as described above, the transfer can be carried out efficiently.

### (2) STEP 2

As the belt conveyors 7L and 7R move in the directions to further narrow the space therebetween, the belt conveyor 7L comes into contact with a left side surface of the transfer target 200. In this state, the belt conveyor 7R is not in contact with the transfer target 200.

### (3) STEP 3

In STEP 2, a force of the belt conveyor 7L acts only on the left side surface of the transfer target 200, and therefore the posture of the transfer target 200 is tilted. Thus, the belt conveyor 7R comes into contact with the transfer target 200. In this state, the transfer control section 83 determines that a sensed posture sensed by the sensing section 13 is tilted with respect to the prescribed posture. Then, the transfer control section 83 either lowers a rotation speed of a conveyor motor 75 that drives the belt conveyor 7L or stops the rotation of the conveyor motor 75 while increasing a rotation speed of a conveyor motor 75 that drives the belt conveyor 7R. Thus, a conveyance speed (operation speed) of the belt conveyor 7R becomes higher than a conveyance speed of the belt conveyor 7L.

### (4) STEP 4

The transfer control section 83 continues, from the state of STEP 3, control of the conveyance speeds of the belt conveyors 7L and 7R. With the configuration, when the posture of the transfer target 200 becomes the prescribed posture, the transfer control section 83 determines that the sensed posture sensed by the sensing section 13 is the prescribed posture, and returns the rotation speeds of the conveyor motors 75 driving the respective belt conveyors 7L and 7R to the same speed. Thus, the conveyance speeds of the belts 74L and 74R become equal.

When the sandwiching position has been detected, the sandwiching control section 82 stops movement of the belt conveyors 7L and 7R in the directions in which the space therebetween is narrowed. Then, the reciprocation control section 81 causes the slide board 41 (belt conveyors 7L and 7R) in that state to move toward the base 2 side. When the slide board 41 has reached the retraction position, the reciprocation control section 81 stops movement of the slide board 41.

As such, according to the present embodiment, the operations of the belts 74L and 74R of the pair of belt conveyors 7L and 7R are made different, and thus a difference between distances at which portions of the transfer target 200 that are held by the pair of belts 74L and 74R are moved can be reduced. Thus, even if the transfer target 200 is tilted, the posture thereof is corrected. Therefore, the transfer of the transfer target 200 can be smoothly carried out.

In the present embodiment, as illustrated in Fig. 5, the posture correction by the transfer device 3 has been described in the case in which the posture of the transfer target 200 has been tilted because the belt 74L (one of the belts) has come into contact with the transfer target 200. The present embodiment is not limited to such a case, and can be applied also to a case in which the transfer target 200 is disposed in a state in which the posture thereof is tilted in the accommodation section 101a. Specifically, in a case where the sensed posture is tilted when the belt conveyors 7L and 7R project to the accommodation section 101a as indicated in STEP 3 of Fig. 5, the transfer control section 83 carries out control for posture correction carried out in STEP 3. The same applies to embodiments described later.

### Embodiment 2

The following description will discuss Embodiment 2 of the present invention with reference to Fig. 5. In the present embodiment, only operations different from those described in Embodiment 1 will be described.

In the present embodiment, the sensing section 13 senses the posture of the transfer target 200 based on a difference between loads applied to the pair of belt conveyors 7L and 7R. The transfer control section 83 carries out control so that, among the belts 74L and 74R of the respective belt conveyors 7L and 7R, an operation speed of one of the belts to which a relatively lighter load is applied becomes higher than an operation speed of the other belt to which a heavier load is applied. The loads on the belts 74L and 74R are detected based on measured values of electric currents flowing through the conveyor motors 75 that drive the belts 74L and 74R, respectively. The control carried out in this case will be described below.

In STEP 2, the belt conveyor 7L is in contact with the transfer target 200, and therefore a load is applied to the belt 74L. The load is light, and therefore a difference between loads applied to the belts 74L and 74R is smaller than a predetermined value D1. Therefore, in this state, the sensing section 13 does not sense that the posture of the transfer target 200 is tilted.

In STEP 3, when the posture of the transfer target 200 is tilted, a load is applied to the belt 74R when the belt 74R comes into contact with the transfer target 200. In this state, the belt conveyor 7L attempts to move the tilted transfer target 200, and therefore the transfer target 200 cannot be moved in a proper transfer direction, and thus a load on the belt 74L increases. Therefore, the difference between loads applied to the belts 74L and 74R exceeds the predetermined value D1. Then, the transfer control section 83 makes the conveyance speed of the belt 74R to which the lighter load is applied higher than the conveyance speed of the other belt 74L to which the heavier load is applied.

Thus, a portion of the transfer target 200 held by one of the pair of belts 74L and 74R to which the relatively lighter load is applied is caused to move more than a portion of the transfer target 200 held the other belt. Thus, the posture of the transfer target 200 is corrected.

The transfer control section 83 continues the control until the difference between loads on the pair of belts 74L and 74R becomes the predetermined value D1 or less.

In a case where it can be considered that the posture of the transfer target 200 has been corrected to the prescribed posture if the difference between the loads is the predetermined value D1 or less, it is possible to correct the posture of the transfer target 200 more accurately by continuing the control of the conveyance speed until the difference between the loads becomes the predetermined value D1 or less.

### Embodiment 3

The following description will discuss Embodiment 3 of the present invention with reference to Fig. 5. In the present embodiment, only operations different from those described in Embodiments 1 and 2 will be described.

In the present embodiment, the sensing section 13 senses the posture of the transfer target 200 based on an image of the transfer target 200 captured by an imaging device (not illustrated). The imaging device may be disposed on the transfer device 3 or may be disposed in the storage warehouse 100. The transfer control section 83 carries out control so that a conveyance speed of one of the pair of belts 74L and 74R at which the transfer target 200 is tilted becomes lower than a conveyance speed of the other belt. In a case where the sensed posture is tilted as in STEP 3, the transfer control section 83 carries out control to make the conveyance speed of the belt 74R higher than the conveyance speed of the belt 74L, as in STEP 3 in Embodiment 1.

A portion of the transfer target 200 held by one of the pair of belts 74L and 74R at which the transfer target 200 is tilted is moved less than a portion of the transfer target 200 held by the other belt. Thus, the posture of the transfer target 200 is corrected.

The transfer control section 83 continues the control until the posture of the transfer target 200 sensed by the sensing section 13 becomes the prescribed posture. Specifically, the transfer control section 83 compares a captured image of the transfer target 200 with an image of the transfer target 200 in the prescribed posture, and thereby determines whether or not the posture of the transfer target 200 has become the prescribed posture. Thus, the posture of the transfer target 200 can be accurately corrected to the prescribed posture.

### Embodiment 4

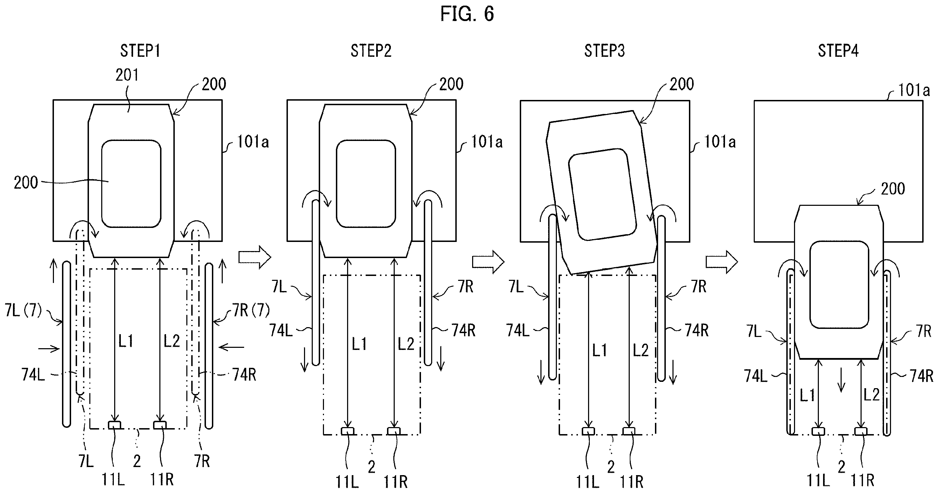

The following description will discuss Embodiment 4 of the present invention with reference to Fig. 6. Fig. 6 is a diagram illustrating an operation to transfer a transfer target 200 by a transfer device 3 in accordance with Embodiment 4 of the present invention. In the present embodiment, only operations different from those described in Embodiments 1 through 3 will be described.

In the present embodiment, as illustrated in Fig. 6, the sensing section 13 includes two distance sensors 11L and 11R. The distance sensors 11L and 11R are, for example, disposed at two different measurement positions that are apart from each other in a right-and-left direction at an end portion on the base 2 of the transfer device 3, the end portion being farthest from the accommodation section 101a. The distance sensors 11L and 11R may be disposed at an end portion of the base 2 at a side opposite to the above positions, in order to measure a distance between the accommodation section 101a illustrated in Fig. 6 and the transfer target 200 that is disposed at an accommodation section 101a (not illustrated) at an opposite side of the base 2 from the accommodation section 101a illustrated in Fig. 6. The sensing section 13 senses the posture of the transfer target 200 based on a difference between straight-line distances in the transfer direction from the transfer target 200 which have been respectively measured by the distance sensors 11L and 11R.

The transfer control section 83 carries out control so that, a conveyance speed of one of the pair of belts 74L and 74R at which a relatively longer straight-line distance has been measured becomes higher than a conveyance speed of the other belt. The control carried out in this case will be described below.

### (1) STEPS 1 and 2

As illustrated in Fig. 6, in a state in which the posture of the transfer target 200 is not tilted, straight-line distances L1 and L2 from the transfer target 200 measured by the distance sensors 11L and 11R are equal.

### (2) STEP 3

In a state in which the posture of the transfer target 200 is tilted, the straight-line distance L1 is shorter than the straight-line distance L2. Then, the transfer control section 83 carries out control to make the conveyance speed of the belt 74R higher than the conveyance speed of the belt 74L, as in STEP 3 in Embodiment 1.

### (3) STEP 4

In a state in which the posture of the transfer target 200 is the prescribed posture, the straight-line distances L1 and L2 are equal. Then, the transfer control section 83 carries out control to make the conveyance speeds of the belts 74L and 74R equal, as in STEP 4 of Embodiment 1.

As such, according to the present embodiment, a portion of the transfer target 200 held by one of the pair of belts 74L and 74R at which a relatively longer straight-line distance L1 or L2 has been measured is caused to move more than a portion of the transfer target 200 held the other belt. Thus, the posture of the transfer target 200 is corrected.

The transfer control section 83 continues the control until the difference between the straight-line distances L1 and L2 becomes a predetermined value D2 or less. In a case where it can be considered that the posture of the transfer target 200 has been corrected to the prescribed posture if the difference between the straight-line distances L1 and L2 is the predetermined value D2 or less, the transfer control section 83 continues the control of the conveyance speed until the difference between the straight-line distances L1 and L2 becomes the predetermined value D2 or less. Thus, the posture of the transfer target 200 can be more accurately corrected.

### [Software Implementation Example]

The functions of the transfer device 3 (hereinafter, referred to as "device") can be realized by a program for causing a computer to function as the device, the program causing the computer to function as the control blocks (particularly, the sections included in the control section 8) of the device.

In this case, the device includes, as hardware for executing the program, a computer that includes at least one control device (e.g., a processor) and at least one storage device (e.g., a memory). By the control device executing the program with use of the storage device, the functions described in the foregoing embodiments are realized.

The program may be recorded in one or more non-transitory computer-readable recording media. The one or more recording media may or may not be included in the device. In the latter case, the program may be supplied to or made available to the device via any wired or wireless transmission medium.

Alternatively, a part or all of the functions of the control blocks can be realized by a logic circuit. For example, the present invention encompasses, in its scope, an integrated circuit in which a logic circuit that functions as each of the control blocks is formed. Alternatively, the functions of the control blocks can be realized, for example, by a quantum computer.

Aspects of the present invention can also be expressed as follows:
A transfer device in accordance with an aspect of the present invention includes: a placement section on which a transfer target is to be placed; a pair of support bodies which are to sandwich the transfer target from a right side and a left side; a control section which carries out control of respective operations of the pair of support bodies so that the pair of support bodies sandwich the transfer target and transfer the transfer target from a transfer origin to the placement section; and a sensing section which senses a posture of the transfer target while the control by the control section is carried out, in a case where the posture sensed by the sensing section is tilted with respect to a prescribed posture, the control section carrying out control so that the pair of support bodies transfer the transfer target in different operations so as to correct the posture of the transfer target.

According to the configuration, the operations of the pair of support bodies are made different, and thus a difference between distances at which portions of the transfer target that are held by the pair of support bodies are moved can be reduced. Thus, even if the transfer target is tilted, the posture thereof is corrected. Therefore, the transfer of the transfer target can be smoothly carried out.

In the transfer device, the sensing section senses the posture based on a difference between loads respectively applied to the pair of support bodies; and the control section carries out control so that an operation speed of one of the pair of support bodies to which a relatively lighter load is applied becomes higher than an operation speed of the other support body to which a heavier load is applied.

According to the configuration, a portion of the transfer target held by one of the pair of support bodies to which the relatively lighter load is applied is caused to move more than a portion of the transfer target held by the other support body. Thus, the posture of the transfer target is corrected.

In the transfer device, the control section continues the control until the difference between loads on the pair of support bodies becomes a predetermined value or less.

According to the configuration, in a case where it can be considered that the posture of the transfer target has been corrected to the prescribed posture if the difference between the loads is the predetermined value or less, it is possible to correct the posture of the transfer target more accurately by continuing the control of the operation speeds until the difference between the loads becomes the predetermined value or less.

In the transfer device, the sensing section senses the posture based on a difference between straight-line distances from the transfer target in a transfer direction, the straight-line distances being respectively measured at two different measurement positions that are apart from each other in a right-and-left direction in the transfer device; and the control section carries out control so that an operation speed of one of the pair of support bodies at a measurement position side where a relatively longer straight-line distance has been measured becomes higher than an operation speed of the other support body.

According to the configuration, a portion of the transfer target held by one of the pair of support bodies at a measurement position side where a relatively longer straight-line distance has been measured is caused to move more than a portion of the transfer target held by the other support body. Thus, the posture of the transfer target is corrected.

In the transfer device, the control section continues the control until the difference between straight-line distances becomes a predetermined value or less.

According to the configuration, in a case where it can be considered that the posture of the transfer target has been corrected to the prescribed posture if the difference between the straight-line distances is the predetermined value or less, it is possible to correct the posture of the transfer target more accurately by continuing the control of the operation speeds until the difference between the straight-line distances becomes the predetermined value or less.

In the transfer device, the sensing section senses the posture based on a captured image of the transfer target; and the control section carries out control so that an operation speed of one of the pair of support bodies at which the transfer target is tilted becomes lower than an operation speed of the other support body.

According to the configuration, a portion of the transfer target held by one of the pair of support bodies at which the transfer target is tilted is moved less than a portion of the transfer target held by the other support body. Thus, the posture of the transfer target is corrected.

In the transfer device, the control section continues the control until the posture sensed by the sensing section becomes the prescribed posture.

According to the configuration, the posture of the transfer target can be accurately corrected to the prescribed posture.

In the transfer device, the pair of support bodies are belts of belt conveyors.

According to the configuration, it is possible to secure large contact areas in which the belts of the belt conveyors are in contact with the transfer target. Therefore, the configuration is suitable for transferring the transfer target.

In order to attain the foregoing object, a carrier in accordance with an aspect of the present invention is a carrier for carrying a transfer target by moving along transfer origins which are sequentially arranged, the carrier including any of the foregoing transfer devices, the transfer device transferring the transfer target between any of the transfer origins and the placement section.

According to the configuration, it is possible to smoothly transfer a transfer target, as with the transfer device described above.

### [Additional Remarks]

The present invention is not limited to the embodiments above, but can be altered by a skilled person in the art within the scope of the claims. The present invention also encompasses, in its technical scope, any embodiment derived by appropriately combining technical means disclosed in differing embodiments.

### Reference Signs List

1: Carrier
3: Transfer device
8: Control section
13: Sensing section
68: Platform (placement section)
74, 74L, 74R: Belt (support body)
83: Transfer control section
101a: Accommodation section (transfer origin)
200: Transfer target
L1, L2: Straight-line distance

## Claims

1. A transfer device, comprising:
a placement section on which a transfer target is to be placed;
a pair of support bodies which are to sandwich the transfer target from a right side and a left side;
a control section which carries out control of respective operations of the pair of support bodies so that the pair of support bodies sandwich the transfer target and transfer the transfer target from a transfer origin to the placement section; and
a sensing section which senses a posture of the transfer target while the control by the control section is carried out,
in a case where the posture sensed by the sensing section is tilted with respect to a prescribed posture, the control section carrying out control so that the pair of support bodies transfer the transfer target in different operations so as to correct the posture of the transfer target.

2. The transfer device as set forth in claim 1, wherein:
the sensing section senses the posture based on a difference between loads respectively applied to the pair of support bodies; and
the control section carries out control so that an operation speed of one of the pair of support bodies to which a relatively lighter load is applied becomes higher than an operation speed of the other support body to which a heavier load is applied.

3. The transfer device as set forth in claim 2, wherein:
the control section continues the control until the difference between loads on the pair of support bodies becomes a predetermined value or less.

4. The transfer device as set forth in any one of claims 1 through 3, wherein:
the sensing section senses the posture based on a difference between straight-line distances from the transfer target in a transfer direction, the straight-line distances being respectively measured at two different measurement positions that are apart from each other in a right-and-left direction in said transfer device; and
the control section carries out control so that an operation speed of one of the pair of support bodies at a measurement position side where a relatively longer straight-line distance has been measured becomes higher than an operation speed of the other support body.

5. The transfer device as set forth in claim 4, wherein:
the control section continues the control until the difference between straight-line distances becomes a predetermined value or less.

6. The transfer device as set forth in any one of claims 1 through 5, wherein:
the sensing section senses the posture based on a captured image of the transfer target; and
the control section carries out control so that an operation speed of one of the pair of support bodies at which the transfer target is tilted becomes lower than an operation speed of the other support body.

7. The transfer device as set forth in claim 6, wherein:
the control section continues the control until the posture sensed by the sensing section becomes the prescribed posture.

8. The transfer device as set forth in any one of claims 1 through 7, wherein:
the pair of support bodies are belts of belt conveyors.

9. A carrier for carrying a transfer target by moving along transfer origins which are sequentially arranged,
said carrier comprising a transfer device recited in any one of claims 1 through 8,
the transfer device transferring the transfer target between any of the transfer origins and the placement section.
